# EUROPEAN PATENT SPECIFICATION

(11) **EP 3 004 715 B1**
(45) Date of publication and mention of the grant of the patent: **21.09.2016**
(21) Application number: 14728504.3
(22) Date of filing: 28.05.2014
(51) Int. Cl.: F16M 11/04, F16M 11/16, F16M 11/24, F16M 11/32, F16M 11/28

(54) **SUPPORT FOR PHOTOGRAPHIC APPARATUSES**
TRÄGER FÜR FOTOGRAFIEVORRICHTUNGEN
SUPPORT POUR APPAREILS PHOTOGRAPHIQUES

(30) Priority: 31.05.2013 IT PD20130154
(43) Date of publication of application: 13.04.2016
(73) Proprietor: Lino Manfrotto + Co. S.P.A., 36022 Cassola (VI) (IT)
(72) Inventor: GABRIELLI, Gabriele, I-36020 Pove Del Grappa (IT)
(74) Representative: Morabito, Sara
(86) International application number: PCT/EP2014/061156
(87) International publication number: WO 2014/191507

(56) References cited:
- EP-A1- 1 939 518
- WO-A1-2007/125082
- US-A- 2 323 473

## Description

### Technical field

The present invention relates to a support for video-photographic apparatuses and the like, of the type including the features set out in the preamble of the main claim.

### Technological background

In the field of photography, television and cinematography, it is widely known to use supports, such as tripods, stands or the like, for supporting the recording apparatuses in an orientable manner, see for example EP1939518.

In such a technical field, the supports set out comprise a cross-member to which there are connected in known manner three or more telescopic legs and a column which is axially slidable inside a hole defined in the cross-member.

At one end of the column there is mounted a plate which is intended to receive the apparatus to be supported.

The legs are usually telescopic and can be positioned and locked at different opening angles with respect to the cross-member, while the axial sliding of the column inside the hole of the cross-member allows variation in the height of the plate and therefore of the apparatus which is engaged therewith in order to carry out recordings of subjects positioned at different heights.

A disadvantage of the known supports is constituted by the interference between the column portion projecting below the cross-member and the support surfaces of the support which prevent positioning of the video-photographic apparatus in a very low position, for example, for carrying out recordings at levels close to the ground.

That disadvantage is overcome by the support described in WO2007/125082 in the name of the same Applicant.

The support of WO2007/125082 comprises a cross-member to which there are hinged the support legs of the tripod, a column which can slide in a hole provided in the cross-member and which is provided at an end thereof with a plate which is intended to receive a video-photographic apparatus and at an opposite end thereof with a cap. The plate and the cap are fixed to the column with removable fixing means so as to be able to be disengaged from the column and fixed at opposite ends of the cross-member.

When it is desirable to limit the vertical spatial requirement of the support, for example, in order to photograph subjects positioned on or near the ground, the operator provides for the separation of the cap and the plate from the column, for removal of the column from the hole of the cross-member and subsequently for the engagement of the plate and the cap directly on the cross-member.

Though that support solves the above-mentioned problem, it has the disadvantage that the operations necessary for converting the support from the configuration with a column to the short configuration, or the configuration without a column, are slightly long and laborious.

In order to carry out the above-mentioned conversion, it is necessary to separate the plate to which the head is fixed and therefore the video-photographic apparatus, from the column and, after having unscrewed the column from the hole, to re-engage the plate directly on the cross-member. Therefore, there is the risk of damaging the head and the video-photographic apparatus.

The problem addressed by the present invention is to provide a support for video-photographic apparatus, which support is structurally and functionally intended to overcome the limitations set out above with reference to the prior art cited.

This problem and other problems which will be appreciated more clearly below are considered and solved by the invention by means of a support produced in accordance with the appended claims.

The features and advantages of the invention will be appreciated more clearly from the detailed description of a preferred though non-exclusive embodiment thereof which is illustrated by way of non-limiting example with reference to the appended drawings, in which:
- Figure 1 is an exploded, broken-away and partially sectioned view of the support of the invention;
- Figure 2 is a broken-away and partially sectioned front view of the support according to the invention in a first operative configuration W;
- Figure 3 is a view similar to that of Figure 2 but in relation to an intermediate configuration W';

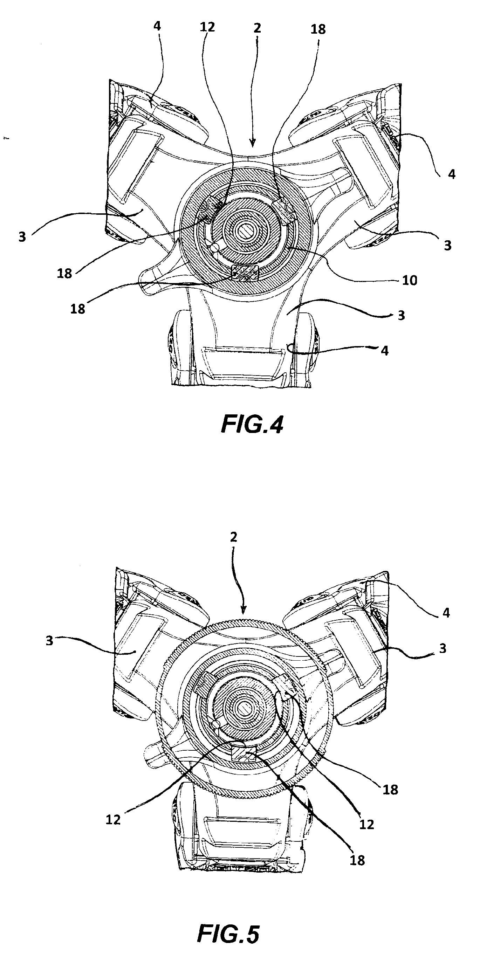

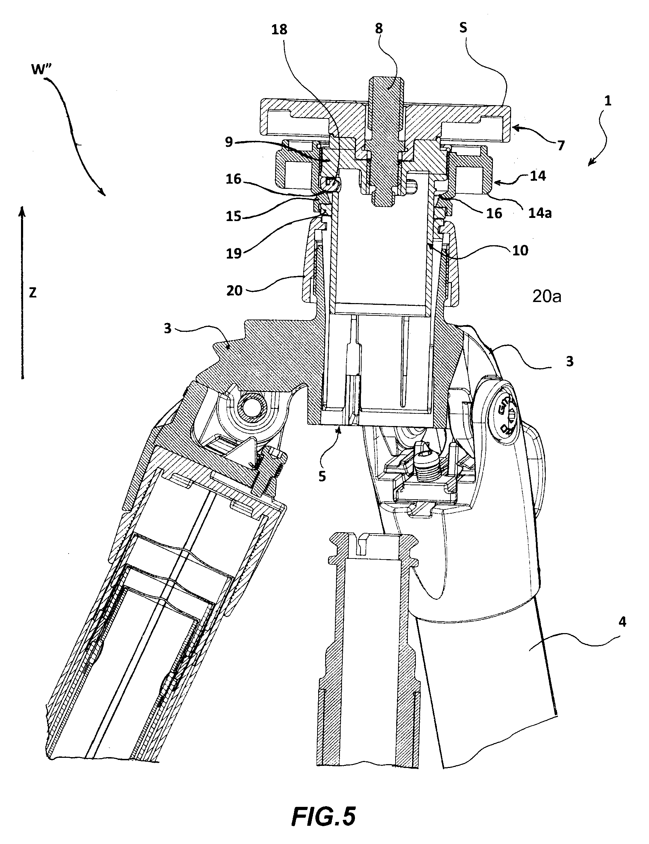

- Figures 4 and 5 are views from above of the support corresponding to the views of Figures 2 and 3, respectively;
- Figure 6 is a view similar to Figure 2 but in relation to a second operative configuration W";

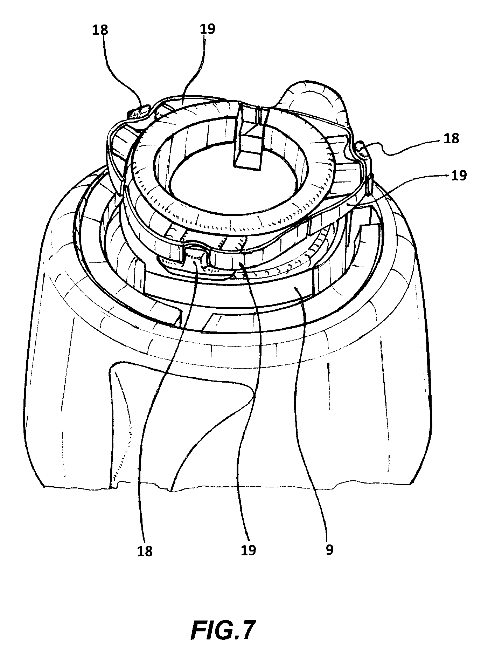

- Figure 7 is a view of a detail of the support of the invention.

The Figures show a support tripod 1 for video-photographic apparatuses, which support is constructed in accordance with the present invention.

The tripod 1 comprises a cross-member 2 which is formed so as to define three hinging extension pieces 3, in the region of each of which a support leg 4 is hinged.

The support legs 4 can be telescopically adjusted in terms of length in a manner which is known per se so as to vary the height of the tripod and/or the spatial requirement thereof.

The cross-member 2 is formed so as to define a sliding hole 5 which is intended to receive in sliding engagement a column 6 of the tripod 1. The column 6 can slide in the hole 5 along a longitudinal axis Z of the same hole 5.

The cross-member 2 further comprises a clamp ring 20 which can be actuated by a user of the tripod 1 to unlock/lock the movement along the axis Z of the column 6 in a manner which is known per se in the sector. The tripod 1 further comprises a plate 7 which is provided with an engagement device, for example, an engaging screw 8 of substantially cylindrical form and coaxial with respect to the longitudinal axis Z in order to engage a piece of video-photographic apparatus (not illustrated in the Figures) with the plate 7.

The plate 7 further comprises an abutment surface S which is intended to receive in abutment the video-photographic apparatus and a coupling portion 9 to which an internally hollow sleeve 10 is coupled. The sleeve 10 extends from the coupling portion 9 of the plate 7 in a direction opposite to the surface S.

The sleeve 10 extends along a longitudinal axis which, during use of the tripod 1, or with the sleeve 10 fixed to the column 6 or the hole 5 itself, substantially corresponds to the longitudinal axis Z of the hole 5. Therefore, the above-mentioned axes will be indicated below with the same reference numeral for the sake of brevity.

The sleeve 10 comprises a tubular cylindrical body extending along longitudinal axis which, during use, substantially corresponds to the longitudinal axis Z of the hole 5.

The sleeve 10 is formed so as to slidingly receive the column 6 in order to couple the column 6 to the plate 7, as will be better explained below.

The sleeve 10 is provided on the external surface 10a thereof with a plurality of circumferentially spaced holes; in the version shown there are provided three holes 12 which are spaced apart by an angle of approximately 120°.

The holes 12 are formed so as to cooperate with a locking device 13 which is provided in the plate 7 and which is arranged to lock/unlock the column 6 in/from the sleeve 10, in order to couple/uncouple the plate 7 and the column 6, as will be better explained below.

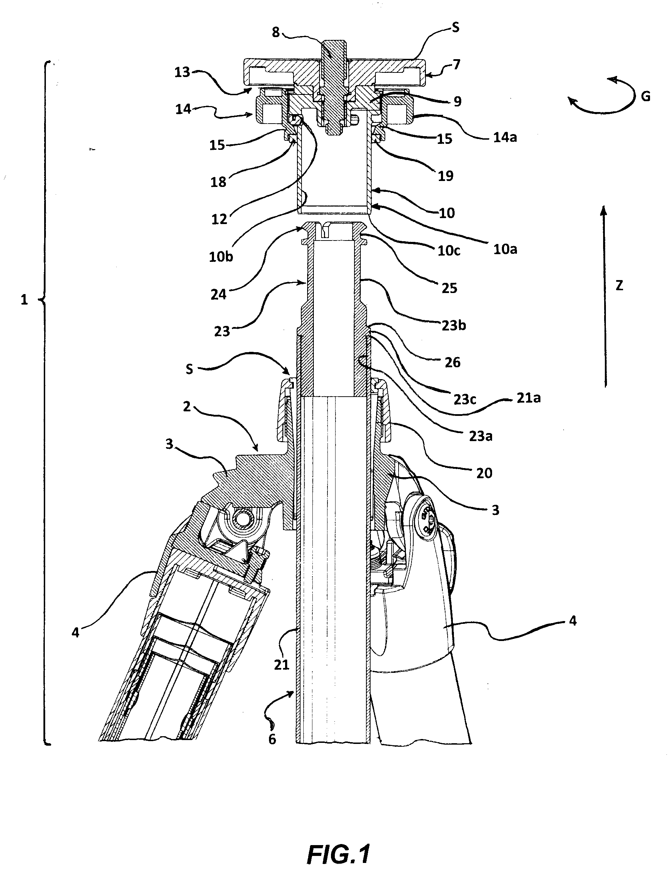

The locking device 13 comprises a locking ring nut 14 which is arranged externally with respect to the coupling portion 9 and which is capable of being rotated, in both directions of the arrow G in Figure 1, by a user of the tripod in order to lock/unlock the column 6 in/from the sleeve 10. The locking device 13 further comprises a plurality of locking blocks 18 which can be moved by means of the locking ring nut 14 in order to lock/unlock the column 6 in the sleeve 10.

In further versions not shown, the support is provided with a locking device 13 different from the ring nut and suitable for moving locking blocks, or different suitable locking means, in order to lock/unlock the column 6 into/from the sleeve 10. As a locking device 13 could for example be used an eccentric lever, a knob, a screw, etc.

The locking blocks 18 are provided in a number corresponding to the holes 12 of the sleeve 10 and each locking block 18 of the plurality of locking blocks is formed so as to be able to be received in a sliding manner in a corresponding hole 12.

In the version shown, there are provided three locking blocks 18 positioned circumferentially equidistant.

Each locking block 18 is produced from metal material, for example, Zamak alloy.

In other versions (not shown) of the tripod 1, there may be provided a different number of locking blocks, which are preferably equidistant.

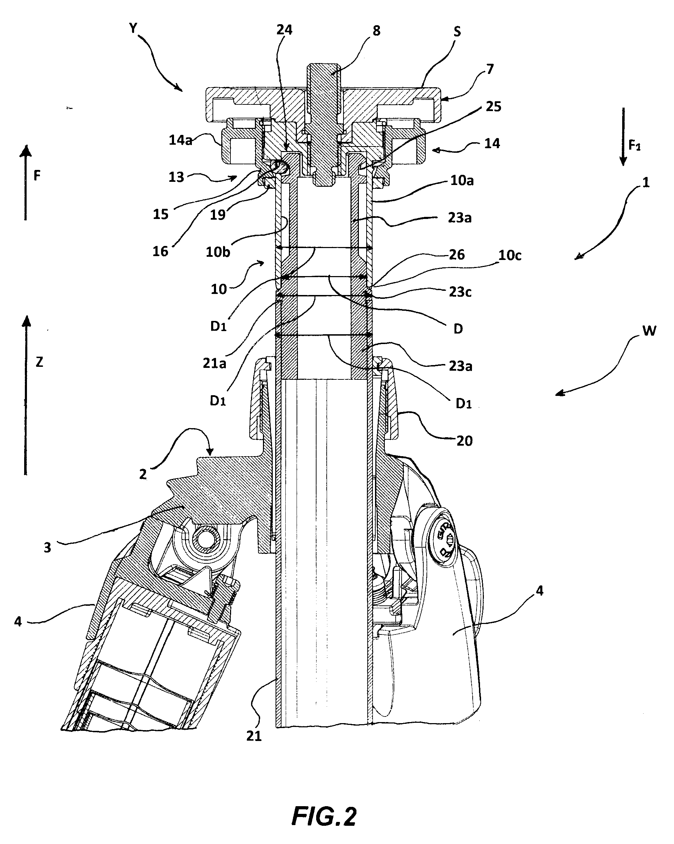

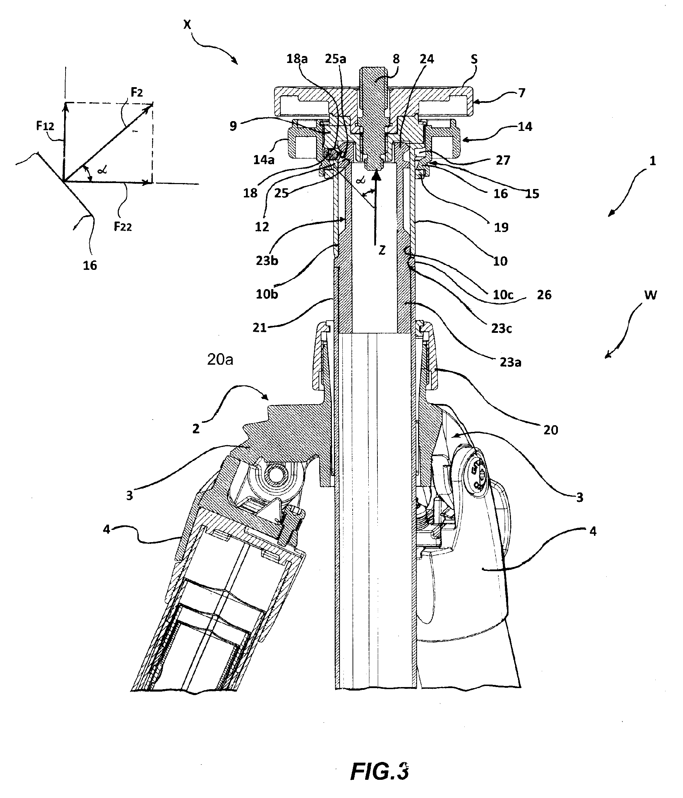

The locking blocks 18 are movable between a retracted configuration X, which is shown in Figure 3 and in which the locking blocks 18 are positioned in a housing 27 which is defined between the locking ring nut 14 and the sleeve 10 and in which configuration the column 6 can be moved with respect to the sleeve 10 and a locking configuration Y, which is shown in Figure 2 and in which each block 18 is inserted in the corresponding hole 12, thereby projecting inside the sleeve 10 and interfering with the column 6, locking it in the sleeve 10, as will be better explained below.

In the locking configuration Y, the locking blocks 18 constitute locking means of the locking device 13 which cooperate with corresponding locking counter-means which are provided on the column 6 in order to lock that column in the sleeve 10.

The locking device 13 further comprises a pushing device which is associated with the locking blocks 18 and which is arranged to push them inside the housing 27 so that they do not interfere with the column 6.

In the version shown, the pushing device comprises three flat springs 29, each flat spring 29 being associated with a corresponding locking block 18 and being arranged so as to apply to each locking block 18 a pushing force which is capable of pushing the locking block 18 into the housing 27.

In other versions which are not shown, there may be provided a pushing device which is different from the flat springs, or a single flat spring.

The locking ring nut 14 comprises a handle 14a which is capable of being gripped by the user in order to rotate the locking nut 14 from which there extends, at the opposite side of the plate 7, an actuation extension piece 15 which is arranged circumferentially externally with respect to the sleeve 10. The actuation extension piece 15 comprises a pushing surface 16 which is arranged in an inclined direction with respect to the longitudinal axis Z of the sleeve 10 and which is capable of receiving in abutment the locking blocks 18 so that the locking blocks 18 can slide with respect to the pushing surface 16. The pushing surface 16 is preferably arranged at an angle α between 15° and 30° with respect to the longitudinal axis Z of the sleeve 10 so as to constitute a sliding cone for the locking blocks 18.

The pushing surface 16 is arranged so as to converge towards the sleeve 10 in a direction away from the locking ring nut 14 so that the pressure applied by the pushing surface 16 to the locking blocks 18 increases in a direction away from the locking nut 14, or in the direction of the arrow F2, as will be better explained below.

Since the pushing surface 16 is inclined with respect to the longitudinal axis Z, moving it along the longitudinal axis Z varies the pressure applied by the pushing surface 16 to the locking blocks 18, as will be better explained below.

The pushing surface 16 which is inclined with respect to the longitudinal axis Z and arranged for receiving in slidable abutment the locking blocks 18 could be provided also with a locking device different form the locking ring nut, in particular not necessarily with rotational locking device.

By the locking ring nut 14 being rotated about the sleeve 10, the ring nut is moved, in accordance with the direction of rotation, in translation along the longitudinal axis Z towards/away from the plate 7, a rototranslational movement of the locking ring nut 14 is thus obtained.

When the ring nut 14 is moved towards the plate 7, the pushing surface 16 which is fixedly joined to the ring nut 14 is also moved towards the plate 7, sliding with respect to the locking blocks 18.

Since, as mentioned, the pushing surface 16 is inclined with respect to the longitudinal axis Z, the translation movement of the pushing surface 16 towards the plate causes there to be applied an increasing pushing force to the locking blocks 18.

The pushing force applied by the pushing surface 16 to the locking blocks 18, which force is indicated by the arrow F2 in Figure 3, is directed in the opposite direction to the pressure applied by the flat springs 29 to the locking blocks 18 and is greater than that pressure.

Therefore, the locking blocks 18 slide on the pushing surface 16 and are pushed towards the plate 7 and progressively removed from the housing 27 and inserted inside the respective holes 12 provided in the sleeve 10 until they are moved into the locking configuration Y in which the locking blocks 18 project inside the sleeve 10 so as to lock the column 6 in the sleeve 10, as will be better explained below.

Conversely, when the ring nut 14 is rotated in the direction of rotation so as to cause the ring nut 14 to move away from the plate 7, the pushing surface 16 moves in translation away from the plate 7, slides with respect to the locking blocks 18, causing a relative movement between the locking blocks 18 and the pushing surfaces 16 so as to reduce the interference between the pushing surface and the locking blocks 18.

Since the pushing surface 16 is inclined with respect to the longitudinal axis Z, the force applied by the pushing surface 16 to the locking blocks 18 progressively decreases, moving the pushing surface 16 in translation away from the ring nut 14.

Therefore, since the locking blocks 18 remain attached to the pushing surface 16 owing to the effect of the pressure applied by the flat springs 29, they are discharged from the respective holes 12 and are progressively received in the housing 27, so as to unlock the column 6 with respect to the sleeve 10, until the retracted configuration X is reached, as will be better explained below.

The flat springs 29 allow the locking blocks 18 to be retained in the housing 27.

The locking ring nut 14 further comprises a gasket 19 which is arranged circumferentially on the sleeve 10 and which is arranged to abut the clamp ring 20 of the cross-member 2.

The column 6 comprises a shaft 21 which is of tubular form and which extends longitudinally along a longitudinal axis of the column 6, that longitudinal axis, during use of the tripod 1 or with the column 6 inserted in the hole 5, substantially corresponds to the longitudinal axis Z of the hole 5, and therefore the above-mentioned axes will be indicated with the same reference numeral below for the sake of brevity.

The shaft 21 is so configured as to be able to slide inside the hole 5 and is provided at a longitudinal end 21a thereof with an engagement portion which is capable of being inserted in the sleeve 10 in order to connect the column 6 to the plate 7.

The engagement portion is formed in the manner of a spigot 23 comprising a first portion 23a which is positioned inside the shaft 21 and which is fixed thereto, a second portion 23b which is capable of being inserted in a sliding manner inside the sleeve 10 and a shoulder 23c which is interposed between the first portion 23a and the second portion 23b and which is capable of acting as a travel limit element during the insertion of the spigot 23 in the sleeve 10.

In the version shown, the shoulder 23c, the shaft 21 and the sleeve 10 have the same outer diameter D1 so that, with the column 6 fixed to the sleeve 10, there is substantially produced a continuous surface and, therefore, the assembly comprising the column 6 and plate 7 can slide freely along the longitudinal axis Z of the hole 5 and both the column 6 and the sleeve 10 can be similarly fixed in the hole 5 of the cross-member 2.

In further versions not shown, the sleeve 10 has an outer diameter D1' which is substantially equivalent to the outer diameter D1 of the shaft 21 of the column 6. The difference between the value of the outer diameter D1' of the sleeve 10 and the outer diameter D1 of the shaft 21, is comprised preferably between 5-10% of the outer diameter D1' of the sleeve 10.

As mentioned before, in a particularly advantageous version, the sleeve 10 and the shaft have the same outer diameter D1.

The column 6 can slide in the hole 5, along the longitudinal axis Z, so as to vary the spacing between the plate 7 and the cross-member 2, or the spatial requirement of the tripod 1 and/or the positioning height of the video-photographic apparatus engaged on the plate 7.

The second portion 23b of the spigot 23 has an outer diameter less than the outer diameter D1 of the shoulder 23c so as to be able to be inserted in the sleeve 10 and to be able to slide inside the sleeve 10.

At the free end 24 of the second portion 23b or at the opposite side with respect to the shoulder 23c, the second portion 23b is provided with a groove 25 which extends circumferentially at the free end 24 and which is formed so as to constitute the locking counter-means which are capable of cooperating with the locking means of the plate 7 in order to lock the column 6 in the sleeve 10.

The groove 25 is formed so as to be connected in a positive-locking manner to the locking blocks 18 of the plate 7 in order to lock the column 6 in the sleeve 10. In the locking position Y, the locking blocks 18 are received in the groove 25.

The surface 26 of the shoulder 23c directed towards the second portion 23b is formed so as to constitute a locking element for the column in the sleeve. The surface 26 is capable of cooperating with the free edge 10c of the sleeve 10 in order to lock the column 6 in the sleeve 10.

The surface 26 is further capable of acting as a travel limit element for the sliding of the column 6 in the sleeve 10, as will be better explained below. The free end 10c and the surface 26 are formed so as to constitute second locking means and counter-means which mutually cooperate in order to lock the column 6 in the sleeve 10, respectively.

The surface 26 is in the form of a spherical extent whilst the free edge 10c is of conical form, and therefore there is produced between the surface 26 and the free edge 10c a linear contact which is capable of locking the column 6 in the sleeve 10.

Therefore, the plate 7 or the sleeve 10 is provided with first and second locking means which are provided in longitudinally opposing positions and which cooperate with corresponding first and second locking counter-means of the column 6 or the spigot 23 which are also provided at longitudinally opposing positions.

Therefore, the spigot 23 and the sleeve 10 are mutually locked in the region of the two opposing longitudinal ends thereof.

This substantially improves the relative locking action between the spigot 23 and, therefore the column 6, and the plate 7, preventing play and oscillations about the longitudinal axis Z.

This improves the positioning of a piece of video-photographic apparatus which is engaged with the plate 7 and the quality of the exposures taken.

When a user wishes to use the tripod 1 in the operative configuration W shown in Figure 2, i.e. with the column 6, he provides for the shaft 21 of the column 6 to be introduced into the hole 5 and the spigot 23 in the sleeve 10 of the plate 7 by pressing the free end 24 towards the coupling portion 9, so as to configure the tripod in the intermediate operative configuration W' of Figure 3.

In the intermediate operative configuration W', the locking blocks 18 are inserted in the housing 27 and the spigot 23 can slide in the sleeve 10.

The locking nut 14 is completely opened or rotated as far as the travel limit furthest from the surface S of the plate 7.

Subsequently, the user provides for locking the column 6 and the plate 7 by moving the tripod into the first operative configuration W of Figure 2.

In order to do this, the user rotates the locking nut 14 about the longitudinal axis Z in such a direction as to cause the locking ring nut 14 to move towards the surface S of the plate 7.

That rotation causes a movement of the pushing surface 16 towards the plate 7, as indicated by the arrow F in Figure 2, which in turn applies a progressively increasing pushing force to the locking blocks 18 in the direction orthogonal to the pushing surface 16, as shown by the arrow F2 in Figure 3.

Since the pushing surface 16 is inclined with respect to the longitudinal axis Z, progressively moving the pushing surface 16 towards the plate 7, the locking blocks 18 are gradually urged towards the plate 7 by the effect of the component F₁₂ of the pushing force F2 and towards the interior of the sleeve 10 by the effect of the component F₂₂ of the pushing force F2.

The locking blocks 18, as a result of the pushing force F2, slide with respect to the pushing surface 16 and are urged towards the plate 7 and gradually inserted inside the holes 12 which are provided in the surface of the sleeve 10 until they reach the locking configuration Y shown in Figure 2, in which the locking blocks 18 are inserted in the groove 25 which is provided in the mouth 24 of the spigot 23, thus locking the column 6 in the sleeve 10. When the locking blocks 18 are progressively introduced into the grove 25, a pushing wall 18a of the blocks interacts with a wall 25a of the groove 25 which is directed towards the plate 7, gradually urging the spigot 23 towards the plate 7.

The spigot 23 is moved in the direction indicated by the arrow F in Figure 2, or further towards the plate 7, and the sleeve 10 is further fitted on the spigot 23 itself until the free edge 10c of the sleeve moves into abutment against the shoulder 23c.

In that position, the surface 26 and the free edge 10c are connected in a positive-locking manner and the spigot 23 is clamped to the sleeve 10.

In the operative configuration W of Figure 2, therefore, the column 6 or the spigot 23 and the plate 7 or the sleeve 10 are mutually locked in two separate longitudinally opposing positions with respect to the axis Z.

During the positioning of the tripod 1 in the operative configuration W, the optional presence of the apparatus fixed to the plate 7 would not constitute impediments to the locking between the column 6 and the plate 7, therefore the apparatus may be readily fixed to the plate 7 equally well before and after it is engaged with the column 6.

In order to adjust the height of the plate 7, the user moves the column 6 in the hole 5 along the longitudinal axis Z until it reaches the desired position, or the height desired for the plate 7 and therefore for the apparatus engaged therewith, and therefore locks the column 6 in the desired position in the hole 5 by means of the clamp ring 20.

The clamp ring 20 is arranged to be rotated about the longitudinal axis Z for clamping/releasing the column 6 or the sleeve 10 to/from the cross-member 2.

The clamp ring 20 is provided with a clamping surface 20a having frusto-conical shape arranged for matching the column 6 or the sleeve 10 for clamping the column 6 or the sleeve 10 into the hole 5 or for releasing the column 6 or the sleeve 10 in order to allow the latters to be moved into the hole 5 along the longitudinal axis Z.

By rotating the clamp ring 20 the frusto-conical clamping surface 20a is moved along the longitudinal axis Z, and consequently the radial dimensions are changed, thus clamping/releasing the column 6 or the sleeve 10 to/from the cross-member 2.

If the user wishes to photograph subjects which are positioned very near the ground and to prevent a spatial requirement of the column 6 which would not allow the apparatus to be positioned as desired, he makes provision for the tripod 1 to be positioned in the second operating position W" shown in Figure 8.

In order to do this, the user provides for unlocking the plate 7 from the column 6 by acting on the locking nut 14 so as to move it away with respect to the plate 7, moving it in the direction indicated by the arrow F1 in Figure 2 so as to move the tripod 1 into the intermediate configuration of Figure 3.

The pushing surface 16 is moved away from the plate 7, the locking blocks 18 are moved out from the groove 25 and the holes 12 being pushed by the flat springs 29, by sliding on the pushing surface 16 and progressively being introduced into the housing 27 provided between the locking nut 14 and the sleeve 10.

When the locking blocks 18 are in the retracted position X shown in Figure 3, the spigot 23 is no longer pressed into abutment against the coupling portion 9, therefore the connection surface 26 does not interfere with the internal surface 10b of the sleeve 10.

With the locking blocks 18 in the retracted position X, therefore, the column 6 is free to slide in the sleeve 10 and may be freely unscrewed from the sleeve 10 in order to uncouple the plate 7 and the column 6.

After disconnecting the plate 7 and the column 6, the user provides for disengaging the column 6 from the hole 5 by unlocking it by means of the clamp ring 20 and withdrawing the column 6 from the hole 5.

The user may optionally initially withdraw the column 6 which is engaged with the plate 7 from the hole 5 and subsequently act on the locking device 13 in order to uncouple the plate 7 and the column 6.

The user then inserts the sleeve 10, without the column 6, in the hole 5 until the gasket 19 is moved into abutment against the clamp ring 20 and, by acting on the clamp ring 20 itself, locks the sleeve 10 in the hole 5, positioning the tripod in the second operative configuration W" of Figure 6. In this position the tubular cylindrical body of the sleeve 10 is at least partly inserted into the hole 5 so as to interact with the clamp ring 20 in order to clamp the sleeve 10 into the hole 5.

Since the sleeve 10 has an outer diameter D1' which is substantially equivalent to the outer diameter of the shaft 21 of the column 6, the locking of the support both in the second operative configuration W" and in the first operative configuration W is stable.

In order to lock the sleeve 10 into the hole 5 of the cross-member 2, the user will act on the clamp ring 20, in a manner known in the field.

The user will rotate the clamp ring 20 about the longitudinal axis Z so as to gradually push the engaging surface 20a towards the sleeve 10 so as to gradually clamp the sleeve 10 into the hole 5.

Moreover since the outer diameter of the sleeve D1' and of the shaft D1 are substantially reciprocally equivalent, it is possible to obtain an effective clamping in both the first and the second operative configuration W, W". The movement between the configurations of the tripod 1 shown in Figures 2 and Figure 6, respectively, may be carried out without any need for separating the apparatus from the plate 7.

Therefore, possible damage to the apparatus is prevented and the operations for converting the tripod 1 are speeded up, and the positioning operations are substantially simplified.

Therefore, the present invention solves the problems set out above with regard to the cited prior art.

## Claims

1. A support (1) for video-photographic apparatuses (1) comprising a cross-member (2) which defines a hole (5), a column (6) having a shaft (21) which is slidable in the hole (5) along a longitudinal axis (Z), a plate (7) which is provided with an engaging device (8) for engaging a piece of video-photographic apparatus with said plate (7) and a sleeve (10) which is internally hollow, which extends along a longitudinal axis (Z) and which is capable of receiving an engaging portion (23) of said column (6), said cross-member (2) comprising a clamp element (20) for clamping said column (6) on said cross-member (2), said plate (7) further comprising a locking device (13, 18, 25, 26, 10c) for removably locking said engaging portion (23) of said column (6) to said sleeve (10), **characterized in that** said sleeve (10) comprises a tubular cylindrical body extending along said longitudinal axis (Z) having an outer diameter (D1') which is substantially equivalent to the outer diameter (D1) of said shaft (21), the sleeve (10) being intended to be inserted in said hole (5) and to engage said clamping element (20) for clamping said sleeve (10) on said cross-member (2).

2. Support according to the preceding claim, wherein said locking device (13) comprises fixing means (18) for fixing said plate (7) which are movable between a retracted position (X) in which said fixing means (18) are positioned inside a housing (27) which is provided in said plate (7) and said engaging portion (23) can be moved in said sleeve (10) and a locking position (Y) in which said mixing means (18) cooperate with fixing counter-means (25) which are provided on said engaging portion (23) in order to lock said column (6) in said sleeve (10).

3. Support according to the preceding claim, wherein said locking means comprise a plurality of sliding blocks (18) which are arranged in a circumferentially spaced-apart position on said plate (7) and which are capable of being slidingly received in corresponding holes (12) of a plurality of holes provided in said sleeve (10) in order to cooperate with said fixing counter-means (25) in order to lock said column (6) in said sleeve (10).

4. Support according to the preceding claim, wherein said plurality of sliding blocks comprise three sliding blocks (18) which are positioned in a circumferentially spaced-apart position on said plate (7).

5. Support according to claim 3 or claim 4, wherein said fixing counter-means comprise a groove type element (25) which is provided to receive said plurality of sliding blocks (18) in said locking position (Y) in order to lock said column (6) in said sleeve (10).

6. Support according to any one of claims 2 to 5, wherein said locking device (13) comprises a locking ring nut (14) which can be rotated about said longitudinal axis (Z) of said sleeve (10) and which can be translated towards/away from said plate (7) as a result of said rotation about the longitudinal axis (Z) in order to move said fixing means (18) from said retracted position (X) to said locking position (Y) and vice versa.

7. Support according to the preceding claim, wherein said locking nut (14) comprises a pushing surface (16) which is inclined through an inclination angle (α) with respect to said longitudinal axis (Z) and which is formed so as to receive in abutment said fixing means (18) in order to move said fixing means (18) between said retracted position (X) and said locking position (Y).

8. Support according to the preceding claim, wherein said pushing surface (16) is inclined through an angle (α) with respect to said longitudinal axis (Z) between 15° and 30°.

9. Support according to any one of the preceding claims, wherein said locking device (13) comprises a pushing device (29) in order to push said fixing means (18) into the housing (27).

10. Support according to any one of the preceding claims, wherein said locking device (13) further comprises additional locking means (10c) which are provided on said sleeve (10) in a longitudinally opposite position with respect to said fixing means (18) and which are arranged in order to cooperate with corresponding additional fixing counter-means (26) which are provided on said engaging portion (23) in a longitudinally opposite position with respect to said locking counter-means (25) and which are provided to lock said column (6) in said sleeve (10).

11. Support according to any one of the preceding claims, wherein said column (6) comprises a shaft (21) so shaped as to be slidable inside said hole (5) and provided at a longitudinal end (21a) thereof with said engagement portion (23) capable of being inserted in said sleeve (10) in order to connect said column (6) to said plate (7).

12. Support according to the preceding claim, wherein said engagement portion (23) comprises a first portion (23a) which is positioned inside said shaft (21), a second portion (23b) which is capable of being inserted in a sliding manner inside said sleeve (10) and a shoulder (23c) which is interposed between said first portion (23a) and said second portion (23b) capable of acting as a travel limit element during the insertion of said engagement portion (23) in said sleeve (10).

13. Support according to any one of the preceding claims, wherein said sleeve (10) and said shaft (21) have respective outer diameters (D1, D1') which are substantially equivalent so that when said column (6) is fixe dot said sleeve (10) a substantial continuous surface is formed along said longitudinal axis (Z) whihc is slidable along said longitudinal axis (Z) of said hole (5).

14. A support (1) for video-photographic apparatuses (1) comprising a cross-member (2) which defines a hole (5), a column (6) having a shaft (21) which is slidable in the hole (5) along a longitudinal axis (Z), a plate (7) which is provided with an engaging device (8) for engaging a piece of video-photographic apparatus with said plate (7) and a sleeve (10) which is internally hollow, which extends along a longitudinal axis (Z) and which is capable of receiving an engaging portion (23) of said column (6), said plate (7) further comprising a locking device (13, 18, 25, 26, 10c) comprising fixing means for removably locking said engaging portion (23) of said column (6) to said sleeve (10), **characterized in that** said locking device (13) comprises a locking ring nut (14) which can be rotated about said longitudinal axis (Z) of said sleeve (10) and which can be translated towards/away from said plate (7) as a result of said rotation about the longitudinal axis (Z) in order to move said fixing means (18) from said retracted position (X) to said locking position (Y) and vice versa, wherein said locking nut (14) comprises a pushing surface (16) which is inclined through an inclination angle (α) with respect to said longitudinal axis (Z) and which is formed so as to receive in abutment said fixing means (18) in order to move said fixing means (18) between said retracted position (X) and said locking position (Y).

## Patentansprüche

1. Stütze (1) für Video-Foto-Vorrichtungen (1), die einen Querträger (2), der eine Öffnung (5) definiert, eine Säule (6) mit einem Schaft (21), der in der Öffnung (5) entlang einer Längsachse (Z) gleitbeweglich ist, eine Platte (7), die mit einer Eingriffsvorrichtung (8) zum Eingriff mit einem Teilstück der Video-Foto-Vorrichtung mit der Platte (7) versehen ist, und eine Hülse (10) aufweist, die innen hohl ist, die sich entlang einer Längsachse (Z) erstreckt und die einen Eingriffsbereich (23) der Säule (6) aufnehmen kann, wobei der Querträger (2) ein Klemmelement (20) zum Festklemmen der Säule (6) auf dem Querträger (2) aufweist, wobei die Platte (7) ferner eine Verriegelungsvorrichtung (13, 18, 25, 26, 10c) zum entfernbaren Verriegeln des Eingriffsbereichs (23) der Säule (6) an der Hülse (10) aufweist, - **dadurch gekennzeichnet, dass** die Hülse (10) einen rohrförmigen zylindrischen Körper, der sich entlang der Längsachse (Z) erstreckt, mit einem Außendurchmesser (D1') aufweist, der im Wesentlichen dem Außendurchmesser (D1) des Schafts (21) entspricht, wobei die Hülse (10) zum Einsetzen in die Öffnung (5) und zum Eingriff mit dem Klemmelement (20) zum Festklemmen der Hülse (10) auf dem Querträger (2) vorgesehen ist.

2. Stütze gemäß dem vorhergehenden Anspruch, wobei die Verriegelungsvorrichtung (13) Fixiereinrichtungen (18) zum Fixieren der Platte (7) aufweist, die zwischen einer zurückgezogenen Position (X), in der die Fixiereinrichtungen (18) innerhalb eines Gehäuses (27) positioniert sind, das in der Platte (7) vorgesehen ist, und der Eingriffsbereich (23) in der Hülse (10) bewegt werden kann, und einer Verriegelungsposition (Y) beweglich sind, in der die Fixiereinrichtungen (18) mit Fixier-Kontereinrichtungen (25) zusammenwirken, die auf dem Eingriffsbereich (23) vorgesehen sind, um die Säule (6) in der Hülse (10) zu verriegeln.

3. Stütze gemäß dem vorgehenden Anspruch, wobei die Verriegelungseinrichtungen eine Mehrzahl von Gleitblöcken (18) aufweisen, die in einer umlaufenden beabstandeten Position auf der Platte (7) angeordnet sind und gleitbeweglich in jeweiligen Öffnungen (12) einer Mehrzahl von Öffnungen, die in der Hülse (10) vorgesehen sind, aufgenommen werden können, um mit den Fixier-Kontereinrichtungen (25) zusammenzuwirken, um die Säule (6) in der Hülse (10) zu verriegeln.

4. Stütze gemäß dem vorgehenden Anspruch, wobei die Mehrzahl von Gleitblöcken drei Gleitblöcke (18) aufweist, die in einer umlaufenden beabstandeten Position auf der Platte (7) positioniert sind.

5. Stütze gemäß Anspruch 3 oder 4, wobei die Fixier-Kontereinrichtungen ein nutartiges Element (25) aufweisen, das vorgesehen ist, um eine Mehrzahl von Gleitblöcken (18) in der verriegelten Position (Y) aufzunehmen, um die Säule (6) in der Hülse (10) zu verriegeln.

6. Stütze gemäß einem der Ansprüche 2 bis 5, wobei die Verriegelungsvorrichtung (13) eine Sicherungs-Ringmutter (14) aufweist, die um die Längsachse (Z) der Hülse (10) herum gedreht und zur Platte (7) oder weg von der Platte (7) infolge einer Drehung um die Längsachse (Z) herum verschoben werden kann, um die Fixiereinrichtungen (18) von der zurückgezogenen Position (X) zur verriegelten Position (Y) und umgekehrt zu bewegen.

7. Stütze gemäß dem vorgehenden Anspruch, wobei die Sicherungsmutter (14) eine Anlagefläche (16) aufweist, die um einen Neigungswinkel (α) bezüglich der Längsachse (Z) geneigt ist und die so ausgebildet ist, um durch Anlage die Fixiereinrichtung (18) aufzunehmen, um die Fixiereinrichtung (18) zwischen der zurückgezogenen Position (X) und der Verriegelungsposition (Y) zu bewegen.

8. Stütze gemäß dem vorgehenden Anspruch, wobei die Anlagefläche (16) um einen Winkel (α) bezüglich der Längsachse (Z) zwischen 15 ° und 30 ° geneigt ist.

9. Stütze gemäß einem der vorhergehenden Ansprüche, wobei die Verriegelungsvorrichtung (13) eine Anlagefläche (29) aufweist, um die Fixiereinrichtungen (18) in das Gehäuse (27) zu drücken.

10. Stütze gemäß einem der vorgehenden Ansprüche, wobei die Verriegelungsvorrichtung (13) ferner zusätzliche Verriegelungseinrichtungen (10c) aufweist, die auf der Hülse (10) in einer längslaufenden gegenüberliegenden Position bezüglich der Fixiereinrichtungen (18) vorgesehen sind, und die angeordnet sind, um mit jeweiligen zusätzlichen Fixier-Kontereinrichtungen (26) zusammenzuwirken, die auf dem Eingriffsbereich (23) in einer längslaufenden gegenüberliegenden Position bezüglich der Verriegelungs-Kontereinrichtungen (25) vorgesehen sind, und die vorgesehen sind, um die Säule (6) in der Hülse (10) zu verriegeln.

11. Stütze gemäß einem der vorgehenden Ansprüche, wobei die Säule (6) einen Schaft (21) aufweist, der so ausgebildet ist, um innerhalb der Öffnung (5) gleitbeweglich zu sein, und an einem zugehörigen Längsende (21a) mit dem Eingriffsbereich (23) vorgesehen ist, der in die Hülse (10) eingesetzt werden kann, um die Säule (6) mit der Platte (7) zu verbinden.

12. Stütze gemäß dem vorgehenden Anspruch, wobei der Eingriffsbereich (23) einen ersten Bereich (23a), der innerhalb des Schafts (21) positioniert ist, einen zweiten Bereich (23b), der in einer gleitbeweglichen Weise innerhalb der Hülse (10) eingesetzt werden kann, und eine Schulter (23c) aufweist, die zwischen dem ersten Bereich (23a) und dem zweiten Bereich (23b) angeordnet ist, die als Wegbegrenzungselement während des Einsetzens des Eingriffsbereichs (23) in die Hülse (10) wirken kann.

13. Stütze gemäß einem der vorgehenden Ansprüche, wobei die Hülse (10) und der Schaft (21) jeweilige Außendurchmesser (D1, D1') aufweisen, die im Wesentlichen gleichwertig sind, sodass, wenn die Säule (6) an der Hülse (10) fixiert wird, eine im Wesentlichen fortlaufende Fläche entlang der Längsachse (Z) gebildet wird, die entlang der Längsachse (Z) der Öffnung (5) gleitbeweglich ist.

14. Stütze (1) für Video-Foto-Vorrichtungen (1), die einen Querträger (2), der eine Öffnung (5) definiert, eine Säule (6) mit einem Schaft (21), der in der Öffnung (5) entlang einer Längsachse (Z) gleitbeweglich ist, eine Platte (7), die mit einer Eingriffsvorrichtung (8) zum Eingriff mit einem Teilstück der Video-Foto-Vorrichtung mit der Platte (7) vorgesehen ist, und eine Hülse (10) aufweist, die innen hohl ist, die sich entlang einer Längsachse (Z) erstreckt und die einen Eingriffsbereich (23) der Säule (6) aufnehmen kann, wobei die Platte (7) ferner eine Verriegelungsvorrichtung (13, 18, 25, 26, 10c) aufweist, die Fixiereinrichtungen zum entfernbaren Verriegeln des Eingriffsbereichs (23) der Säule (6) an der Hülse (10) aufweist, - **dadurch gekennzeichnet, dass** die Verriegelungsvorrichtung (13) eine Sicherungs-Ringmutter (14) aufweist, die um die Längsachse (Z) der Hülse (10) herum gedreht und zur Platte (7) oder weg von der Platte (7) infolge der Drehung um die Längsachse (Z) herum verschoben werden kann, um die Fixiereinrichtungen (18) von der zurückgezogenen Position (X) zur Verriegelungsposition (Y) und umgekehrt zu bewegen, wobei die Sicherungsmutter (14) eine Anlagefläche (16) aufweist, die um einen Neigungswinkel (α) bezüglich der Längsachse (Z) geneigt ist, und die ausgebildet ist, um durch Anlage die Fixiereinrichtung (18) aufzunehmen, um die Fixiereinrichtung (18) zu bewegen.

## Revendications

1. Support (1) pour appareils photo-vidéo (1) comprenant un élément transversal (2) qui définit un trou (5), une colonne (6) ayant un arbre (21) qui peut coulisser dans le trou (5) le long d'un axe longitudinal (Z), une plaque (7) qui est prévue avec un dispositif de mise en prise (8) pour mettre en prise un morceau de l'appareil photo-vidéo avec ladite plaque (7) et un manchon (10) qui est intérieurement creux, qui s'étend le long d'un axe longitudinal (Z) et qui peut recevoir une partie de mise en prise (23) de ladite colonne (6), ledit élément transversal (2) comprend un élément de serrage (20) pour serrer ladite colonne (6) sur ledit élément transversal (2), ladite plaque (7) comprenant en outre un dispositif de blocage (13, 18, 25, 26, 10c) pour bloquer de manière amovible ladite partie de mise en prise (23) de ladite colonne (6) sur ledit manchon (1), **caractérisé en ce que** :
ledit manchon (10) comprend un corps cylindrique tubulaire s'étendant le long dudit axe longitudinal (Z) ayant un diamètre externe (D1') qui est sensiblement équivalent au diamètre externe (D1) dudit arbre (21), le manchon (10) étant prévu pour être inséré dans ledit trou (5) et pour mettre en prise ledit élément de serrage (20) pour serrer ledit manchon (10) sur ledit élément transversal (2).

2. Support selon la revendication précédente, dans lequel ledit dispositif de blocage (13) comprend des moyens de fixation (18) pour fixer ladite plaque (7) qui sont mobiles entre une position rétractée (X) dans laquelle lesdits moyens de fixation (18) sont positionnés à l'intérieur d'un boîtier (27) qui est prévu dans ladite plaque (7) et ladite partie de mise en prise (23) peut être déplacée dans ledit manchon (10) et une position de blocage (Y) dans laquelle lesdits moyens de fixation (18) coopèrent avec des contre-moyens de fixation (25) qui sont prévus sur ladite partie de mise en prise (23) afin de bloquer ladite colonne (6) dans ledit manchon (10).

3. Support selon la revendication précédente, dans lequel lesdits moyens de blocage comprennent une pluralité de blocs coulissants (18) qui sont agencés dans une position circonférentiellement espacée sur ladite plaque (7) et qui peuvent être reçus de manière coulissante dans des trous (12) correspondants d'une pluralité de trous prévus dans ledit manchon (10) afin de coopérer avec lesdits contre-moyens de fixation (25) afin de bloquer ladite colonne (6) dans ledit manchon (10).

4. Support selon la revendication précédente, dans lequel ladite pluralité de blocs coulissants comprend trois blocs coulissants (18) qui sont positionnés dans une position circonférentiellement espacée sur ladite plaque (7).

5. Support selon la revendication 3 ou la revendication 4, dans lequel lesdits contre-moyens de fixation comprennent un élément de type rainure (25) qui est prévu pour recevoir ladite pluralité de blocs coulissants (18) dans ladite position de blocage (Y) afin de bloquer ladite colonne (6) dans ledit manchon (10).

6. Support selon l'une quelconque des revendications 2 à 5, dans lequel ledit dispositif de blocage (13) comprend un écrou à oeil de blocage (14) qui peut être entraîné en rotation autour dudit axe longitudinal (Z) dudit manchon (10) et qui peut effectuer un mouvement de translation vers/à distance de ladite plaque (7) en raison de ladite rotation autour de l'axe longitudinal (Z) afin de déplacer lesdits moyens de fixation (18) de ladite position rétractée (X) à ladite position de blocage (Y) et vice versa.

7. Support selon la revendication précédente, dans lequel ledit écrou de blocage (14) comprend une surface de poussée (16) qui est inclinée à travers un angle d'inclinaison (α) par rapport audit axe longitudinal (Z) et qui est formée afin de recevoir, en butée, lesdits moyens de fixation (18) pour déplacer lesdits moyens de fixation (18) entre ladite position rétractée (X) et ladite position de blocage (Y).

8. Support selon la revendication précédente, dans lequel ladite surface de poussée (16) est inclinée sur un angle (α) par rapport audit axe longitudinal (Z) entre 15° et 30°.

9. Support selon l'une quelconque des revendications précédentes, dans lequel ledit dispositif de blocage (13) comprend un dispositif de poussée (29) afin de pousser lesdits moyens de fixation (18) dans le boîtier (27).

10. Support selon l'une quelconque des revendications précédentes, dans lequel ledit dispositif de blocage (13) comprend en outre des moyens de blocage supplémentaires (10c) qui sont prévus sur ledit manchon (10) dans une position longitudinalement opposée par rapport auxdits moyens de fixation (18) et qui sont agencés afin de coopérer avec des contre-moyens de fixation supplémentaires correspondants (26) qui sont prévus sur ladite partie de mise en prise (23) dans une position longitudinalement opposée par rapport auxdits contre-moyens de blocage (25) et qui sont prévus pour bloquer ladite colonne (6) dans ledit manchon (10).

11. Support selon l'une quelconque des revendications précédentes, dans lequel ladite colonne (6) comprend un arbre (21) formé afin de pouvoir coulisser à l'intérieur dudit trou (5) et prévu au niveau de son extrémité longitudinale (21a) avec ladite partie de mise en prise (23) pouvant être insérée dans ledit manchon (10) afin de raccorder ladite colonne (6) à ladite plaque (7).

12. Support selon la revendication précédente, dans lequel ladite partie de mise en prise (23) comprend une première partie (23a) qui est positionnée à l'intérieur dudit arbre (21), une seconde partie (23b) qui peut être insérée d'une manière coulissante à l'intérieur dudit manchon (10) et un épaulement (23c) qui est intercalé entre ladite première partie (23a) et ladite seconde partie (23b) pouvant servir d'élément de fin de course pendant l'insertion de ladite partie de mise en prise (23) dans ledit manchon (10).

13. Support selon l'une quelconque des revendications précédentes, dans lequel ledit manchon (10) et ledit arbre (21) ont des diamètres externes (D1, D1') respectifs qui sont sensiblement équivalents de sorte que lorsque ladite colonne (6) est fixée sur ledit manchon (10), une surface sensiblement continue est formée le long dudit axe longitudinal (Z), qui peut coulisser le long dudit axe longitudinal (Z) dudit trou (5).

14. Support (1) pour appareils photo-vidéo (1) comprenant un élément transversal (2) qui définit un trou (5), une colonne (6) ayant un arbre (21) qui peut coulisser dans le trou (5) le long d'un axe longitudinal (Z), une plaque (7) qui est prévue avec un dispositif de mise en prise (8) pour mettre en prise un morceau de l'appareil photo-vidéo avec ladite plaque (7) et un manchon (10) qui est intérieurement creux, qui s'étend le long d'un axe longitudinal (Z) et qui peut recevoir une partie de mise en prise (23) de ladite colonne (6), ladite plaque (7) comprenant en outre un dispositif de blocage (13, 18, 25, 26, 10c) comprenant des moyens de fixation pour bloquer de manière amovible ladite partie de mise en prise (23) de ladite colonne (6) sur ledit manchon (10), **caractérisé en ce que** ledit dispositif de blocage (13) comprend un écrou à oeil de blocage (14) qui peut être entraîné en rotation autour dudit axe longitudinal (Z) dudit manchon (10) et qui peut effectuer un mouvement de translation vers/à distance de ladite plaque (7) en raison de ladite rotation autour de l'axe longitudinal (Z) afin de déplacer lesdits moyens de fixation (18) de ladite position rétractée (X) à ladite position de blocage (Y) et vice versa, dans lequel ledit écrou de blocage (14) comprend une surface de poussée (16) qui est inclinée sur un angle d'inclinaison (α) par rapport audit axe longitudinal (Z) et qui est formée afin de recevoir, en butée, lesdits moyens de fixation (18) afin de déplacer lesdits moyens de fixation (18) entre ladite position rétractée (Y) et ladite position de blocage (Y).
